# EUROPEAN PATENT SPECIFICATION

(11) **EP 2 929 973 B1**
(45) Date of publication and mention of the grant of the patent: **29.05.2019**
(21) Application number: 13860297.4
(22) Date of filing: 03.12.2013
(51) Int. Cl.: B23K 9/173, B23K 9/16, B23K 33/00

(54) **METHOD OF NARROW-GROOVE GAS-SHIELDED ARC WELDING**
VERFAHREN ZUM LICHTBOGENSCHWEISSEN IN SCHUTZGAS MIT KLEINEM BANDABSTAND
PROCÉDÉ DE SOUDAGE À L'ARC SOUS PROTECTION GAZEUSE SUR CHANFREIN ÉTROIT

(30) Priority: 04.12.2012 JP 2012265521
(43) Date of publication of application: 14.10.2015
(73) Proprietor: JFE Steel Corporation, Tokyo 100-0011 (JP)
(72) Inventor: KATAOKA, Tokihiko, Tokyo 100-0011 (JP); SUMI, Hiroyuki, Tokyo 100-0011 (JP); KITANI, Yasushi, Tokyo 100-0011 (JP); OI, Kenji, Tokyo 100-0011 (JP); YASUDA, Koichi, Tokyo 100-0011 (JP)
(74) Representative: Haseltine Lake LLP
(86) International application number: PCT/JP2013/082898
(87) International publication number: WO 2014/088110

(56) References cited:
- DE-A1- 10 216 530
- JP-A- S5 111 033
- JP-A- S6 149 779
- JP-A- H01 148 469
- JP-A- H10 211 597
- JP-A- S59 212 176
- JP-A- S60 210 368
- JP-A- S63 207 475
- JP-A- S63 207 475
- JP-A- 2000 218 391
- JP-A- 2001 001 148
- JP-A- 2002 539 950
- JP-A- 2007 118 068
- JP-B2- 3 122 306
- US-A- 3 826 888

## Description

### TECHNICAL FIELD

The present invention relates to a method for gas-shielded arc welding and particularly to a method for narrow-groove gas-shielded arc welding of thick steel materials, see e.g. JP S63-207475 A (PTL 3).

In the context of the present invention, "narrow-groove" refers to a groove angle of 20° or less and to the narrowest groove width between steel materials to be welded being 50 % or less of the sheet thickness of the steel materials.

### BACKGROUND

For gas-shielded arc welding used in welding work on steel, a consumable electrode that uses CO₂ gas alone, or a mixed gas of Ar and CO₂, to shield the fusion zone is typical. This type of welding is widely used in the fields of manufacturing automobiles, buildings, bridges, electrical equipment, and the like.

In recent years, however, along with an increase in size and thickness of steel structures, the amount of deposition has increased for welding during the manufacturing process, particularly for butt welding of steel materials, and furthermore a long time is necessary for weld working, leading to an increase in weld working costs.

One method for improving this situation is to adopt narrow-groove gas-shielded arc welding for multilayer welding by arc welding the groove in a space that is small with respect to the sheet thickness. The amount of deposition is less for narrow-groove gas-shielded arc welding than for regular gas-shielded arc welding, allowing for an increase in welding efficiency and a reduction in energy. A reduction in weld working costs is therefore also expected.

As a technique related to such narrow-groove gas-shielded arc welding, JP H07-116852 A (PTL 1) discloses a narrow-groove MIG welding torch, and a welding method using the welding torch, whereby the opening in the nozzle for the welding shielding gas is formed as a slanted oval (ellipse) for good diffusion of the shielding gas, the opening in the contact tip of the torch is formed as an oval, and the weaving direction of the weld wire is always set to be a certain direction.

In this welding method, stacked welding using an inert gas is performed with one pass per layer. In such welding with one pass per layer, however, heat concentrates in the central portion of the groove, so that fusion becomes insufficient at the groove face of the steel materials and the depth of fusion decreases. To compensate, the weaving direction of the weld wire is always set to be a certain direction, thus ensuring the depth of fusion at the groove face and reducing the number of welding defects due to lack of penetration or the like.

Furthermore, JP S50-67758 A (PTL 2) discloses a tip for submerged welding in which one surface of a tip portion of a welding torch end is projected, and the projecting portion is curved to be concave along a through-hole.

This tip for submerged welding uses the curl of the weld wire to feed the weld wire from the tip in a curved state, thereby generating an arc at a position near the groove face to ensure the depth of fusion at the groove face and reduce the number of welding defects due to lack of penetration or the like.

JP S-63-207475 A (PTL 3) discloses a method for monitoring an arc and adjusting the position of a wire during narrow-groove gas-shielded arc welding to join thick steel materials by making the tip of the shielding gas nozzle flat in the direction of the weld line.

It also discloses a method for narrow-groove gas-shielded arc welding to join thick steel materials, e.g. of the grade SM50A, having a sheet thickness of e.g. 90 mm by narrow-groove multilayer welding, a bottom portion groove angle being e.g. 10°, and a bottom portion groove gap being e.g. 10 mm, the method comprising: using two passes or more for initial layer welding, distributing the passes over both sides of the bottom portion groove gap, and controlling a feed angle of a weld wire fed from a power supply tip of a welding torch end to be in a range of 10° to 20° with respect to a perpendicular line.

### CITATION LIST

### Patent Literature

PTL 1: JP H07-116852 A
PTL 2: JP S50-67758 A
PTL 3: JP S63-207475 A

With the techniques disclosed in PTL 1 and PTL 2, however, the fusion at the groove face of the steel materials cannot always be deemed to be sufficient. Therefore, in the techniques disclosed in PTL 1 and PTL 2, for effective suppression of welding defects due to lack of penetration or the like, it is considered necessary to form a groove in the steel materials by applying an extremely precise and clean machining process.

On the other hand, apart from high value-added steel structures, in general structures such as buildings, bridges, and ships, factors such as cost have made it standard to form a groove by gas cutting, plasma cutting, or the like and to weld the resulting steel material as is. Groove formation by gas cutting, plasma cutting, or the like is low cost and has high workability. Groove formation by gas cutting, plasma cutting, or the like, however, roughens the surface of the groove face, i.e. the surface roughness tends to increase, making it difficult to perform highly accurate processing such as a machining process.

Therefore, it is difficult to apply the techniques disclosed in PTL 1 and PTL 2 to general structures such as buildings, bridges, ships, and the like.

The present invention has been developed to resolve the above problems and provides a method for narrow-groove gas-shielded arc welding of thick steel materials that, even when using low-cost groove formation by gas cutting, plasma cutting, or the like, can effectively prevent defects due to high-temperature cracks, lack of fusion, or the like without the need for treatment or the like of the groove face.

### SUMMARY

In order to solve the above problems, the inventors of the present invention repeatedly investigated the connection between the bead shape, including the penetration shape, and welding defect prevention when using a method for narrow-groove gas-shielded arc welding of thick steel materials, in particular a method for narrow-groove gas-shielded arc welding of thick steel materials having a sheet thickness of 22 mm or more.

As a result, the inventors discovered that in the aforementioned method for narrow-groove gas-shielded arc welding of thick steel materials, by setting the depth of fusion from the groove face at the bottom portion of the thick steel material to be 1.5 mm or more, defects due to high-temperature cracks, lack of fusion, or the like can effectively be prevented even when performing highly efficient narrow-groove gas-shielded arc welding using thick steel materials subjected to groove formation by gas cutting, plasma cutting, or the like.

Upon further research, the inventors discovered that the following conditions are extremely important for stably achieving a depth of fusion of 1.5 mm or more at the bottom portion of the thick steel materials. Namely, the groove conditions in the narrow-groove gas-shielded arc welding are:
(a) Bottom portion groove angle: 10° or less, and
(b) Bottom portion groove gap: 7 mm or more to 15 mm or less.

Additionally, the welding conditions, in particular the initial layer welding conditions, are:
(c) Two passes or more, distributed over both sides of the bottom portion groove gap; and
(d) A feed angle of the weld wire fed from the power supply tip of the welding torch end of 5° or more to 15° or less with respect to a perpendicular line.

The present invention is based on these findings.

The primary features of the present invention are as follows.
1. A method for narrow-groove gas-shielded arc welding to join thick steel materials having a sheet thickness of 22 mm or more by narrow-groove multilayer welding, a bottom portion groove angle being 10° or less, and a bottom portion groove gap being 7 mm or more to 15 mm or less, the method comprising:
   using two passes or more for initial layer welding, distributing the passes over both sides of the bottom portion groove gap, and controlling a feed angle of a weld wire fed from a power supply tip of a welding torch end to be in a range of 5° or more to 15° or less with respect to a perpendicular line so as to set a depth of fusion at a bottom portion of the thick steel materials to be 1.5 mm or more, wherein in the initial layer welding, a wire curved to have a curvature radius in a range of 150 mm or more to 300 mm or less is used as the weld wire fed to the power supply tip.
2. The method of 1., wherein in the initial layer welding, a distance at a bottom portion groove between a lateral end of a tip of the weld wire and a groove face of the thick steel materials is from 0.5 mm or more to 2.0 mm or less.
3. The method of 1. or 2., wherein in the initial layer welding, a weld deposit height is set to be 0.4 times or more to 1.0 times or less the bottom portion groove gap.
4. The method of any one of 1. to 3., wherein a mixed gas containing 60 vol% or more of CO₂ gas is used as a shielding gas in the narrow-groove gas-shielded arc welding.

According to the present invention, it is possible to perform highly efficient narrow-groove gas-shielded arc welding that does not yield defects due to high-temperature cracks, lack of fusion, or the like even when applying low-cost groove formation by gas cutting, plasma cutting, or the like, and that also yields a small amount of deposition.

Furthermore, the welded joint resulting from narrow-groove gas-shielded arc welding has a greatly reduced manufacturing cost as compared to a conventional welded joint and is therefore extremely useful, particularly in general structures such as buildings, bridges, ships, and the like.

### BRIEF DESCRIPTION OF THE DRAWINGS

The present invention will be further described below with reference to the accompanying drawings, wherein:
FIG. 1 illustrates a variety of groove shapes in the welding method according to the present invention;
FIG. 2 illustrates how to perform welding according to the present invention in a V-shaped groove;
FIG. 3 illustrates the groove after the initial layer welding with the welding method according to the present invention in a V-shaped groove;
FIG. 4 illustrates the maximum depth of the concave portion on the groove face; and
FIG. 5 is a photograph of a groove cross-section after the initial layer welding with the welding method according to the present invention in an Inventive Example (Sample No. 7) of the present invention.

### DETAILED DESCRIPTION

The present invention will be described in detail below.

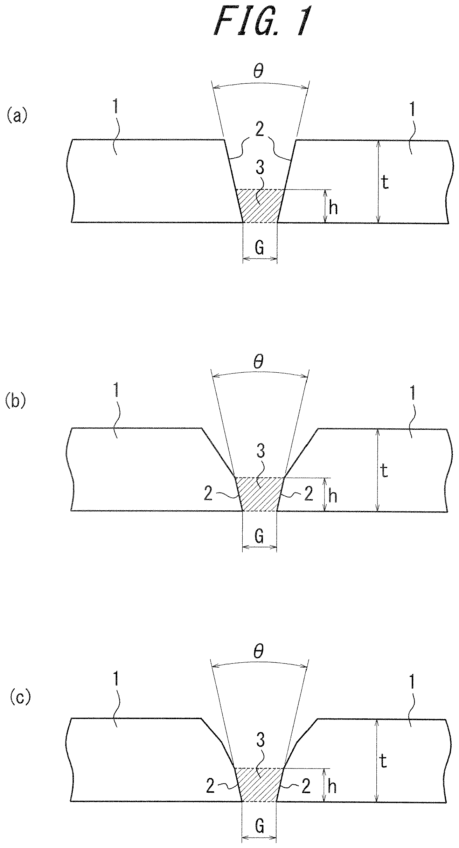

FIGS. 1(a) to (c) illustrate a variety of groove shapes targeted by the welding method according to the present invention. In these drawings, reference number 1 indicates thick steel material, 2 indicates the groove face of thick steel material, 3 indicates the bottom portion groove, reference sign θ indicates the bottom portion groove angle, G indicates the bottom portion groove gap, h indicates the bottom portion groove height, and t indicates the sheet thickness.

As illustrated in these drawings, either a V-shaped groove (including an I-shaped groove) or a Y-shaped groove may be adopted as the groove shape in the welding method of the present invention, and as illustrated in FIG. 1(c), a Y-shaped groove with multiple steps may also be adopted.

Here, the bottom portion groove is defined as the groove at the lower portion of the steel materials. The groove at the lower portion of the steel materials refers to a region extending from the bottom surface of the steel materials up to approximately 20 % to 40 % of the sheet thickness.

The bottom portion groove angle is indicated by θ, the bottom portion groove gap by G, and the bottom portion groove height by h in relation to the above definition for the bottom portion groove. In the case of a V-shaped groove, the bottom portion groove height h is defined as 20 % of the sheet thickness t.

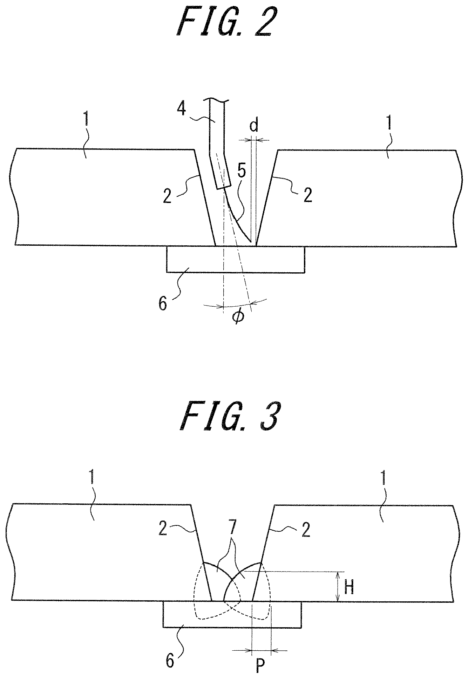

FIG. 2 illustrates how to perform welding according to the present invention in a V-shaped groove. In FIG. 2, reference numbers 4 and 5 respectively indicate the power supply tip of the welding torch and the weld wire, 6 indicates backing material, reference sign *φ* indicates the feed angle of the weld wire fed from the power supply tip of the welding torch end, and d indicates the distance at the bottom portion groove between the lateral end of the tip of the weld wire and the groove face of the thick steel material.

Here, an example of a V-shaped groove is illustrated, yet *φ* and d are similar for other groove shapes as well.

FIG. 3 illustrates the groove after the initial layer welding with the welding method according to the present invention in a V-shaped groove. In FIG. 3, reference number 7 indicates weld beads, reference sign P indicates the depth of fusion at the bottom portion of the thick steel material, and H indicates the weld deposit height (average height of the weld beads).

Here, an example of a V-shaped groove is illustrated, yet P and H are similar for other groove shapes as well.

Next, the reasons for limiting the bottom portion groove angle, the bottom portion groove gap, and the sheet thickness of the steel materials to the aforementioned ranges in the welding method of the present invention are explained.

### Bottom portion groove angle θ: 10° or less

As the groove portion of the steel material is smaller, it becomes possible to perform highly efficient welding faster, yet defects such as a lack of fusion occur more easily. Furthermore, welding when the bottom portion groove angle exceeds 10° can be performed with a conventional method. Therefore, the target of the present invention is a bottom portion groove angle of 10° or less for which welding with a conventional method is difficult and for which a further increase in efficiency can be expected.

In a V-shaped groove, the case of the bottom portion groove angle being 0° is referred to as an I-shaped groove, and from the perspective of the amount of deposition, 0° is the most efficient angle, yet the groove closes during welding due to welding heat strain. In light of this, the bottom portion groove angle is preferably set in accordance with the sheet thickness t (or the bottom portion groove height h in the case of a Y-shaped groove).

Specifically, the bottom portion groove angle is preferably set in a range of (0.5 × t/20)° to (2.0 × t/20)°, and more preferably in a range of (0.8 × t/20)° to (1.2 × t/20)°. For example, in the case of a sheet thickness t of 100 m, the bottom portion groove angle is preferably in a range of 2.5° to 10°, and more preferably in a range of 4° to 6°.

Upon the sheet thickness t exceeding 100 mm, however, the upper limit of the preferred range exceeds 10°. In this case, the upper limit of the preferred range is set to 10°.

### Bottom portion groove gap G: 7 mm or more to 15 mm or less

As the groove portion of the steel material is smaller, it becomes possible to perform highly efficient welding faster, yet defects such as a lack of fusion occur more easily. Furthermore, welding when the bottom portion groove gap exceeds 15 mm can be performed with a conventional method. Therefore, the target of the present invention is a bottom portion groove gap of 15 mm or less for which welding with a conventional method is difficult and for which a further increase in efficiency can be expected. On the other hand, when the bottom portion groove gap is less than 7 mm, welding with two or more passes per layer as described below becomes difficult. Therefore, the bottom portion groove gap is set to be in a range of 7 mm or more to 15 mm or less, and preferably in a range of 8 mm or more to 12 mm or less.

### Sheet thickness t: 22 mm or more

The sheet thickness of the steel material is set to 22 mm or more. The reason is that if the sheet thickness of the steel material is less than 22 mm, upon increasing the groove angle in a conventional single bevel groove and reducing the groove gap, the groove cross-sectional area in some cases becomes smaller than that of the groove targeted by the present invention.

For example, when the sheet thickness t is 20 mm, then in an I-shaped groove targeted by the present invention with a bottom portion groove angle of 0° and a bottom portion groove gap of 7 mm, the groove cross-sectional area is 140 mm², yet in a single bevel groove with a groove angle of 25° and a groove gap of 2 mm, the groove cross-sectional area is 133 mm². Welding for the single bevel groove thus has a smaller amount of deposition and is highly efficient.

When targeting general rolled steel material, the upper limit of the sheet thickness is typically 100 mm. Accordingly, the upper limit on the sheet thickness of the steel material targeted by the present invention is preferably 100 mm or less.

As the type of steel targeted by the present invention, high-strength steel is particularly preferable. The reason is that high-strength steel has a strictly limited welding heat input, and cracks easily occur in the weld metal. By contrast, in the present invention, welding can be performed efficiently from the initial layer to the final layer at a heat input of 20 kJ/cm or less, and the weld shape of each pass is nearly that of fillet welding at 90°, yielding a shape that does not crack easily. Furthermore, welding of 780 MPa grade steel is possible without preheating, and welding of high-alloy 590 MPa grade corrosion-resistant steel is also possible. Of course, the present invention may also be applied to soft steel without any problem.

The reasons for restricting the bottom portion groove angle, the bottom portion groove gap, and the thickness of the steel materials in the welding method of the present invention have been described. When these restrictions are satisfied, it is essential in the present invention to set the depth of fusion at the bottom portion of the thick steel materials to be 1.5 mm or more.

### Depth of fusion at bottom portion of thick steel materials: 1.5 mm or more

During groove formation of the steel materials in the present invention, gas cutting, plasma cutting, laser cutting, or the like is used. The use of a machining process, however, is not negated. On the other hand, the depth of fusion necessary for the groove face in narrow-groove gas-shielded arc welding is mainly determined by the surface characteristics of the groove face (in particular, the depth of the concave portion and the degree of cleanliness).

With groove formation by gas cutting, which is most typical, a large difference occurs in the finishing of the cut surface depending on the selection of the gas flow rate and the burner during gas cutting, except in the cases of special steel, stainless steel, or the like. For example, the depth of the concave portion on the surface of the groove face when the gas flow rate and burner are adjusted well is approximately 0.2 mm or less, yet in a special case, such as when the flame flow rate is below normal due to wear of the burner or other such reason, the depth of the concave portion may exceed 1 mm. Even if such a concave portion occurs, however, the steel material is welded as is for general structures or the like, without any further treatment. Accordingly, for effective prevention of defects due to high-temperature cracks, lack of fusion, or the like, the groove face needs to be fused deeper at the time of welding, in particular the bottom portion of the thick steel materials which tends to be at a low temperature during welding and to have a small depth of fusion. Furthermore, the groove face also needs to be fused deeper at the time of welding because the cut surface is covered by a thick oxidized film generated during heating.

For these reasons, in the present invention, the depth of fusion at the bottom portion of the thick steel materials is set to 1.5 mm or more. The depth of fusion is preferably 2.0 mm or more. If the depth of fusion exceeds 4 mm, however, undercut occurs in the upper portion of the weld bead on the groove face, leading to a welding defect. Hence, the depth of fusion is preferably 4 mm or less.

As described above, in the present invention, it is essential that the depth of fusion at the bottom portion of the thick steel materials be 1.5 mm or more. To achieve this depth of fusion, it is extremely important to control the welding conditions during gas-shielded arc welding, in particular the welding conditions for the initial layer, to be within the ranges of the present invention.

The following describes the welding conditions for the initial layer in detail.

### Initial layer welding: Two passes or more, distributed over both sides of the bottom portion groove gap

In narrow-groove multilayer welding, one pass per layer is typical. With one pass per layer, however, heat concentrates in the center of the groove. Fusion at the groove face of the steel materials is therefore insufficient, easily leading to defects such as a lack of fusion (cold wrap) and inclusion of spatter and slag deposited on the groove face. In particular, since the temperature of the steel materials is low and the depth of fusion is small for the initial layer welding, defects due to a lack of fusion occur easily.

Accordingly, in order to ensure the necessary depth of fusion and amount of deposition and to suppress defects such as a lack of fusion in the initial layer welding, it is necessary to use two passes or more for the initial layer welding, and in order to make it easier to fuse both sides of the groove face, it is necessary to distribute the passes over both sides of the bottom portion groove gap.

On the other hand, when four passes or more are used for the initial layer welding, the heat input per pass reduces, and the amount of fusion decreases. Hence, two or three passes are preferably used for the initial layer welding. To ensure the amount of fusion by increased heat input and to increase efficiency, the initial layer welding is optimally performed with two passes.

To stabilize the arc and the penetration shape, movement of the welding torch and the electrode (weld wire), such as weaving or rotation, is preferably suppressed.

### Feed angle of the weld wire fed from the power supply tip of the welding torch end: 5° or more to 15° or less with respect to a perpendicular line

The arc has the property of being directional and of tending to face the direction in which the tip of the electrode (weld wire) points. To use this directionality of the arc effectively during welding of the groove face, it is necessary for the direction in which the electrode tip points to be directed to the groove face. The direction in which the electrode tip points varies greatly depending on the feed angle of the weld wire fed from the power supply tip of the welding torch end.

If the feed angle of the weld wire fed from the power supply tip of the welding torch end is less than 5° with respect to a perpendicular line, the current ends up flowing over a path with less resistance. As a result, the arc crawls up the wire (arc crawl), which is the electrode, making it difficult to maintain fusion at the targeted groove face, in particular at the bottom portion. On the other hand, if the feed angle of the weld wire fed from the power supply tip of the welding torch end exceeds 15° with respect to a perpendicular line, the shape of the weld bead becomes convex due to the arc being directed excessively to the groove face. Fusion then becomes insufficient for the arc at the next pass, causing a welding defect. Accordingly, the feed angle of the weld wire fed from the power supply tip of the welding torch end is restricted to a range of 5° or more to 15° or less with respect to a perpendicular line. The feed angle is preferably 6° or more to 12° or less.

Note that since the feed angle of the weld wire fed from the power supply tip of the welding torch end is the same as the inclination of the power supply tip, in particular the leading edge of the power supply tip, the feed angle of the weld wire can be controlled by the inclination of the leading edge of the power supply tip.

While basic conditions have been described above, a deeper depth of fusion from the groove face at the bottom portion of the thick steel materials can more stably be achieved with the welding method of the present invention by further satisfying the conditions below.

### Distance at the bottom portion groove between the lateral end of the tip of the weld wire and the groove face of the thick steel material: 0.5 mm or more to 2.0 mm or less

To achieve a deeper depth of fusion more stably at the bottom portion of the thick steel materials, the distance at the bottom portion groove between the lateral end of the tip of the weld wire and the groove face of the thick steel material is preferably 0.5 mm or more to 2.0 mm or less.

The reason is that if the distance at the bottom portion groove between the lateral end of the tip of the weld wire and the groove face of the thick steel material is less than 0.5 mm, the arc is generated between the upper portion of the wire and the groove face, and the groove face at the bottom portion of the thick steel materials cannot be efficiently fused. On the other hand, upon exceeding 2.0 mm, the arc separates from the groove face, and the groove face cannot be efficiently fused. The distance is more preferably in a range of 0.5 mm to 1.0 mm.

In this context, the lateral end of the tip of the weld wire refers to the lateral end that is closer to the groove face of the thick steel material that is being fused in each pass.

### Curvature radius of weld wire fed to power supply tip: 150 mm or more to 300 mm or less

In the present invention, in order to control the feed angle of the weld wire fed from the power supply tip of the welding torch end, a power supply tip with a bent leading end is used. As a result, the weld wire passes through the power supply tip with a bent leading end. For the weld wire to pass through more smoothly, the weld wire is preferably bent in advance using a three-point roller or the like.

If the curvature radius of the weld wire is less than 150 mm, the feeding resistance of the wire increases, preventing stable feeding of the weld wire and making it difficult to maintain the arc. On the other hand, upon the curvature radius of the weld wire exceeding 300 mm, feeding with the leading end of the power supply tip in a bent state has no effect of reducing the feeding resistance, again preventing stable feeding of the weld wire and making it difficult to maintain the arc.

Accordingly, the curvature radius of the weld wire fed to the power supply tip is preferably 150 mm or more to 300 mm or less. The curvature radius is more preferably 175 mm or more to 275 mm or less.

### Weld deposit height H: 0.4 times or more to 1.0 times or less the bottom portion groove gap G

By appropriately managing the weld deposit height per layer with respect to the groove gap, the shape of the weld bead, including penetration, becomes constant for each pass, and stable penetration into the groove face can be ensured. Furthermore, higher heat input is effective for achieving deeper penetration, yet if the heat input is too high, the weld deposit height increases, making it difficult to fuse the groove face evenly at both sides.

If the weld deposit height per layer is less than 0.4 times the bottom portion groove gap G, heat input is insufficient, and deep fusion of the groove face becomes difficult. Moreover, the amount of deposition per pass is insufficient, and the shape of the weld bead ends up changing in each layer. On the other hand, if the weld deposit height per layer exceeds 1.0 times the bottom portion groove gap G, the amount of deposition per pass is too large, and the groove face cannot be fused evenly at both sides.

Accordingly, the weld deposit height is preferably set to be 0.4 times or more to 1.0 times or less the bottom portion groove gap G. The weld deposit height is more preferably set to be 0.5 times or more to 0.8 times or less the bottom portion groove gap G.

The welding conditions for layers other than the initial layer are not restricted, yet it suffices for welding conditions basically to be similar to those of the initial layer as described above.

### Shielding gas composition: 60 vol% or more of CO₂ gas

The penetration of the weld zone is controlled by the gouging effect due to the arc itself and the convection of the weld metal in a high-temperature state. When the convection of the weld metal is inward, the weld metal at a high temperature flows downwards from above, thereby increasing the penetration directly below the arc. On the other hand, when the convection of the weld metal is outward, the weld metal at a high temperature flows to the left and right from the center, the weld bead expands, and penetration into the groove face increases. Accordingly, in order to achieve a depth of fusion at the bottom portion of the thick steel material of 1.5 mm or more, which is the target in the present invention, convection of the weld metal is preferably outward.

Therefore, the sum of the concentrations of oxygen (O) and sulfur (S) which control the fluidity of the weld metal needs to be set preferably to 400 mass ppm or more (and to 1000 mass ppm or less, since guaranteeing toughness of the weld metal becomes difficult upon exceeding 1000 mass ppm).

Here, since the amount of oxygen in the weld metal is greatly affected by the shielding gas composition, the shielding gas composition is preferably a mixed gas containing 60 vol% or more of CO₂ gas, the remainder being an inert gas such as Ar. Using 100 vol% of CO₂ gas is particularly preferable.

The penetration at the weld zone is also influenced by the directionality of the arc and the gouging effect. Accordingly, the polarity of the welding is preferably wire minus (positive polarity), which yields a better arc directionality and larger gouging effect.

Conditions other than those described above need not be restricted, and a regular method may be used. For example, the following settings may be used. Weld current: 280 A to 360 A; welding voltage: 32 V to 37 V (increased with current); welding speed: 30 cm/min to 80 cm/min; length of protruding wire: 15 mm to 30 mm; wire diameter: 1.2 mm to 1.6 mm; welding heat input per pass: 10 kJ/cm to 25 kJ/cm.

### EXAMPLES

Steel materials having the groove shapes listed in Table 1 were welded by narrow-groove gas-shielded arc welding under the welding conditions listed in Table 2.

Gas cutting was used for groove formation in the steel materials, and no treatment such as grinding was performed on the groove face. The maximum depth of the concave portion on the groove face was measured using a laser displacement gauge.

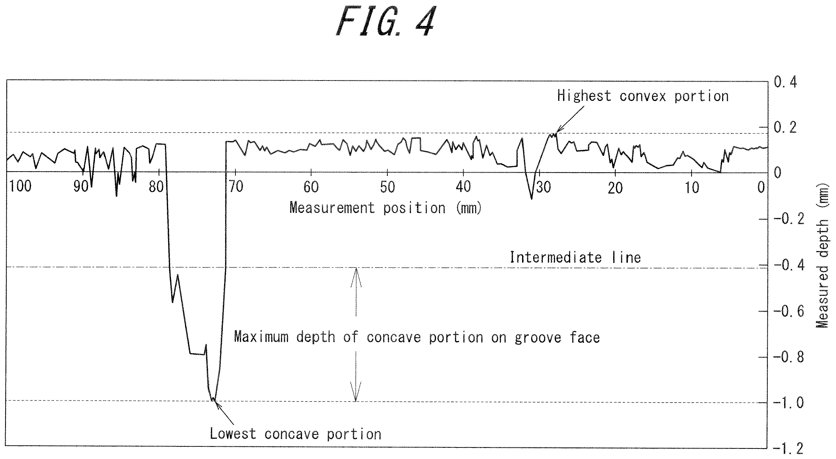

In other words, as illustrated in FIG. 4, two parallel lines were drawn respectively passing through the highest concave portion and the lowest convex portion among measurement points, with all of the measurement points falling between the two parallel lines. An intermediate line was also drawn. Here, a concave portion is a portion lower than the intermediate line, and the depth of the concave portion on the groove face was defined as the distance between the concave portion and the intermediate line. The maximum depth of the concave portion on the groove face is the maximum value of the depth of the concave portion.

The measurement results are also listed in Table 1.

Five cross-sections of the resulting welded joints were cut, and the fusion width of the bottom portion was measured in each cross-section. In order to measure the depth of fusion for each cross-section, the length corresponding to the bottom portion groove gap was subtracted from the measured fusion width, and the result was divided by two. The average was then calculated. This value was taken as the depth of fusion in the bottom portion of the steel material.

The resulting welded joints were subjected to ultrasonic testing and evaluated as follows.
Excellent: no defects detected
Good: only allowable defects with a defect length of 3 mm or less
Poor: defects with a defect length exceeding 3 mm detected

Table 2 also lists these results.

### [Table 1]

**Table 1**

| No. | Steel material | | Groove shape | | | |
|---|---|---|---|---|---|---|
| | Steel type (grade) | Sheet thickness t (mm) | Shape | Bottom portion groove angle θ (°) | Bottom portion groove gap G (mm) | Maximum depth of concave portion on groove face (mm) |
| 1 | 490 MPa grade | 40 | V-shape | 4 | 11 | 1.0 |
| 2 | 570 MPa grade | 100 | V-shape | 10 | 15 | < 0.2 |
| 3 | 780 MPa grade | 25 | I-shape | 0 | 12 | 0.5 |
| 4 | corrosion-resistant steel | 60 | V-shape | 5 | 7 | < 0.2 |
| 5 | 490 MPa grade | 22 | V-shape | 4 | 8 | 1.0 |
| 6 | 590 MPa grade | 80 | V-shape | 6 | 9 | 1.0 |
| 7 | 490 MPa grade | 40 | I-shape | 0 | 10 | 1.5 |
| 8 | 490 MPa grade | 40 | V-shape | 4 | 12 | 1.0 |
| 9 | 780 MPa grade | 25 | I-shape | 0 | 12 | 0.5 |
| 10 | 780 MPa grade | 25 | I-shape | 0 | 12 | 0.5 |
| 11 | 490 MPa grade | 40 | Y-shape | 5 | 10 | 0.8 |
| 12 | 490 MPa grade | 40 | Y-shape | 5 | 10 | 1.2 |
| 13 | 490 MPa grade | 40 | V-shape | 2 | 8 | 0.4 |
| 14 | 490 MPa grade | 40 | V-shape | 2 | 6 | 0.4 |
| 15 | 490 MPa grade | 40 | V-shape | 4 | 10 | 0.3 |
| 16 | 490 MPa grade | 40 | V-shape | 4 | 10 | 0.3 |
| 17 | 490 MPa grade | 40 | V-shape | 4 | 10 | 0.2 |

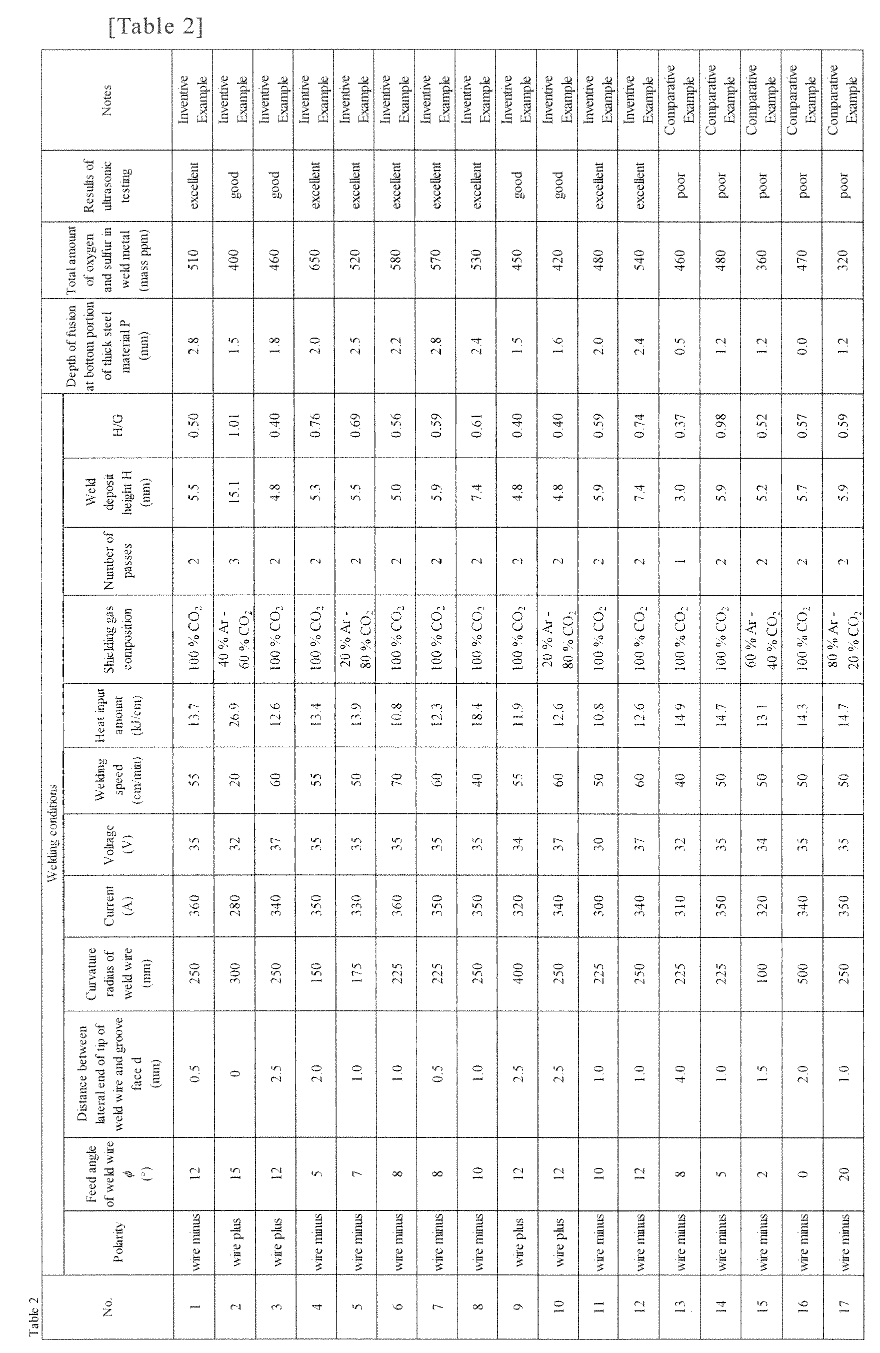

As illustrated in Table 2, for each of Sample Nos. 1 to 12, which are Inventive Examples, the depth of fusion at the bottom portion of the steel material was 1.5 mm or more, and during ultrasonic testing, either no defect was detected or the defect length was 3 mm or less.

Conversely, for each of Sample Nos. 13 to 17, which are Comparative Examples, the depth of fusion at the bottom portion of the steel material did not reach 1.5 mm, and during ultrasonic testing, a defect with a defect length exceeding 3 mm was detected.

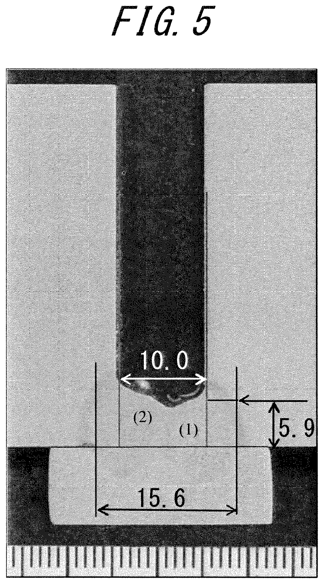

FIG. 5 is a photograph of a groove cross-section after initial layer welding of Sample No. 7, an Inventive Example. Numbers (1) and (2) in FIG. 5 indicate the weld bead of the first pass and of the second pass. As is clear from FIG. 5, a good depth of fusion was obtained on both sides of the groove face at the bottom portion of the thick steel materials, with a depth of fusion at the bottom portion of the thick steel materials of approximately 3.2 mm on the first pass welding and approximately 2.4 mm on the second pass welding.

### REFERENCE SIGNS LIST

1: Thick steel material
2: Groove face of thick steel material
3: Bottom portion groove
4: Power supply tip of welding torch
5: Weld wire
6: Backing material
7: Weld bead
θ: Bottom portion groove angle
G: Bottom portion groove gap
h: Bottom portion groove height
t: sheet thickness
*φ*: Feed angle of weld wire fed from power supply tip of welding torch end
d: Distance at bottom portion groove between lateral end of tip of weld wire and groove face of thick steel material
P: Depth of fusion at bottom portion of thick steel material
H: Weld average deposit height

## Claims

1. A method for narrow-groove gas-shielded arc welding to join thick steel materials (1) having a sheet thickness of 22 mm or more by narrow-groove multilayer welding, a bottom portion groove angle (θ) being 10° or less, and a bottom portion groove gap (G) being 7 mm or more to 15 mm or less, the method comprising:
using two passes or more for initial layer welding, distributing the passes over both sides of the bottom portion groove gap (G), and controlling a feed angle of a weld wire (5) fed from a power supply tip (4) of a welding torch end to be in a range of 5° or more to 15° or less with respect to a perpendicular line so as to set a depth of fusion at a bottom portion of the thick steel materials to be 1.5 mm or more;
wherein in the initial layer welding, a wire curved to have a curvature radius in a range of 150 mm or more to 300 mm or less is used as the weld wire (5) fed to the power supply tip.

2. The method of claim 1, wherein in the initial layer welding, a distance at a bottom portion groove (3) between a lateral end of a tip of the weld wire (5) and a groove face of the thick steel materials is from 0.5 mm or more to 2.0 mm or less.

3. The method of claim 1 or 2, wherein in the initial layer welding, a weld deposit height (H) is set to be 0.4 times or more to 1.0 times or less the bottom portion groove gap (G).

4. The method of any one of claims 1 to 3, wherein a mixed gas containing 60 vol% or more of CO₂ gas is used as a shielding gas in the narrow-groove gas-shielded arc welding.

## Patentansprüche

1. Verfahren zum Lichtbogenschweißen in Schutzgas mit kleinem Bandabstand zum Verbinden von dicken Stahlmaterialien (1), die eine Blechdicke von 22 mm oder mehr haben, durch Mehrschichtschweißen mit kleinem Bandabstand, wobei ein Bodenteil-Rillenwinkel (θ) 10° oder weniger beträgt, und ein Bodenteil-Bandabstand (G) 7 mm oder mehr bis 15 mm oder weniger beträgt, wobei das Verfahren umfasst:
unter Verwendung von zwei Durchgängen für das anfängliche Schweißen, Verteilen der Durchgänge auf beide Seiten des Bodenteil-Bandabstandes (G) und Steuern eines Zufuhrwinkels eines Schweißdrahtes (5), der von einer Stromversorgungsspitze (4) eines Schweißbrennerendabschnitts versorgt wird, in einem Bereich von 5° oder mehr bis zu 15° oder weniger, bezogen auf eine senkrechte Linie, um so eine Schmelztiefe an einem Bodenteil der dicken Stahlmaterialien auf 1,5 mm oder mehr einzustellen;
wobei beim anfänglichen Schichtschweißen ein Draht, der einen Krümmungsradius im Bereich von 150 mm oder mehr bis zu 300 mm oder weniger hat, als der Schweißdraht (5) verwendet wird, der der Stromversorgungsspitze zugeführt wird.

2. Verfahren nach Anspruch 1, wobei beim anfänglichen Schichtschweißen ein Abstand an einer Rille (3) des unteren Teils zwischen einem seitlichen Ende einer Spitze des Schweißdrahtes (5) und einer Rillenfläche der dicken Stahlmaterialien 0,5 mm oder mehr bis 2,0 mm oder weniger ist.

3. Verfahren nach Anspruch 1 oder 2, wobei beim anfänglichen Schichtschweißen eine Schweißnahthöhe (H) auf 0,4 mal oder mehr bis zu 1,0 mal oder weniger des Bodenteil-Bandabstandes (G) eingestellt ist.

4. Verfahren nach einem der Ansprüche 1 bis 3, wobei ein Mischgas, das 60 Vol-% oder mehr CO₂-Gas enthält, als Schutzgas beim Lichtbogenschweißen in Schutzgas mit kleinem Bandabstand verwendet wird.

## Revendications

1. Procédé de soudage à l'arc sous protection gazeuse de rainure étroite pour assembler des matériaux en acier épais (1) ayant une épaisseur de feuille de 22 mm ou plus par soudage multicouche de rainure étroite, un angle de rainure de partie inférieure (θ) étant de 10° ou moins, et un intervalle de rainure de partie inférieure (G) étant de 7 mm ou plus à 15 mm ou moins, le procédé comprenant les étapes consistant à :
utiliser deux passes ou plus pour un soudage de couche initiale, répartissant les passes sur les deux côtés de l'intervalle de rainure de partie inférieure (G), et commander un angle d'avance d'un fil de soudure (5) alimenté par une pointe d'alimentation (4) d'une extrémité de torche de soudage pour qu'il soit dans une plage allant de 5° ou plus à 15° ou moins par rapport à une ligne perpendiculaire de manière à fixer une profondeur de fusion de 1,5 mm ou plus au niveau d'une partie inférieure des matériaux en acier épais ;
dans lequel dans le soudage de couche initiale, un fil incurvé pour avoir un rayon de courbure dans une plage de 150 mm ou plus à 300 mm ou moins est utilisé en tant que fil de soudage (5) amené à la pointe d'alimentation.

2. Procédé selon la revendication 1, dans lequel dans le soudage de couche initiale, une distance au niveau d'une rainure de partie inférieure (3) entre une extrémité latérale d'une pointe du fil de soudage (5) et une face de rainure des matériaux en acier épais va de 0,5 mm ou plus à 2,0 mm ou moins.

3. Procédé selon la revendication 1 ou 2, dans lequel dans le soudage de couche initiale, une hauteur de dépôt de soudure (H) est définie pour être de 0,4 fois ou plus à 1,0 fois ou moins l'intervalle de rainure de partie inférieure (G).

4. Procédé selon l'une quelconque des revendications 1 à 3, dans lequel un gaz mixte contenant 60 % en volume ou plus de CO₂ gazeux est utilisé comme gaz de protection dans le soudage à l'arc sous protection gazeuse de rainure étroite.
